# EUROPEAN PATENT APPLICATION

(11) **EP 4 708 823 A1**
(43) Date of publication of application: **11.03.2026**
(21) Application number: 25198807.7
(22) Date of filing: 28.08.2025
(51) Int. Cl.: H04L 67/1095, H04L 67/06, H04L 67/10, H04L 67/1001, H04L 67/1097, H04L 67/568

(54) **DISTRIBUTING DIGITAL CONTENT WITH EDGE DEVICES**

(30) Priority: 10.09.2024 US 202463693134 P; 20.03.2025 US 202519085148
(71) Applicant: eBay Inc., San Jose, CA 95125 (US)
(72) Inventor: MOODALBAIL GANESHMURTHY, Harish, SAN JOSE (US); PATIL, Yogesh Yashwant, SAN JOSE (US); ROBISON, Timothy David, SAN JOSE (US); GUPTA, Geetanjali, SAN JOSE (US); SANGHVI, Kaivan, SAN JOSE (US); CHEN, Brian, SAN JOSE (US); GANESHALINGAM, Anton Raj Sujindhar, SAN JOSE (US); SELVARAJ, Arun, SAN JOSE (US); GANDHI, Kunal Hasmukh, SAN JOSE (US)
(74) Representative: Müller-Boré & Partner Patentanwälte PartG mbB

(57) **Abstract**

In the implementation of techniques for distributing digital content with edge devices, a system receives a request including digital content from a client device for uploading the digital content. Based on the request, the system identifies a nearest edge device from a plurality of edge devices. The system transmits instructions to the nearest edge device to generate a unique identifier corresponding to the digital content and to store the digital content. The system initiates one or more requests to a predefined number of one or more edge devices from the plurality of edge devices to store the digital content. The system receives confirmation from the predefined number of one or more edge devices that the digital content is stored. The system generates a response including content corresponding to the unique identifier, which is usable to access the digital content stored. The system broadcasts the response to the client device.

## Description

### RELATED APPLICATIONS

This Application claims priority under 35. U.S.C. Section 119(e) to U.S. Provisional Patent Application No. 63/693,134, filed September 10, 2024, and titled "Distributing Digital Content with Edge Devices," the entire disclosure of which is hereby incorporated by reference.

### BACKGROUND

Conventional techniques for distributing digital content over long distances generally require multiple network hops, each of which adds significant time to the overall process. The time-consuming nature of the network hops, combined with the inability to optimize digital content distribution based on network conditions, exacerbates the inefficiencies. The limitations of the conventional techniques for distributing digital content over long distances result in adverse outcomes, including substantial latency issues, poor user experiences, and excessively long upload times.

### SUMMARY

Techniques and systems for distributing digital content with edge devices are described. In an example, an edge device (e.g., a distributed edge device) receives an upload request from a client device for uploading digital content, in which the edge device is a nearest edge device to the client device of a plurality of edge devices, and the upload request includes the digital content. Based on the upload request, the edge device generates a unique identifier corresponding to the digital content. The edge device stores the digital content associated with the unique identifier.

The edge device sends one or more replication requests to a predefined number of one or more edge devices of the plurality of edge devices to store the digital content. The edge device receives, from the predefined number of the one or more edge devices of the plurality of edge devices, confirmation that the digital content is stored at the predefined number of the one or more edge devices of the plurality of edge devices. Responsive to the confirmation, the edge device generates a success response including content corresponding to the unique identifier, in which the content corresponding to the unique identifier is usable to access the digital content. The edge device broadcasts the success response to the client device. In this way, the disclosed techniques and systems enable efficient digital content distribution techniques that address the scalability and latency issues of the conventional techniques - for distributing digital content over long distances - by leveraging edge devices.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 is an illustration of a digital medium environment in an example implementation that is operable to employ techniques and systems for distributing digital content with edge devices as described herein.
FIG. 2A depicts a system 200a in an example implementation showing operation of the edge devices for uploading digital content.
FIG. 2B depicts a system 200b in an example implementation showing operation of a nearest edge device for broadcasting a response including content corresponding to a unique identifier corresponding to digital content uploaded.
FIG. 3 depicts a system in an example implementation showing operation of the digital content management system for uploading the digital content with the edge devices.
FIG. 4 depicts a system in an example implementation showing operation of the edge devices for uploading digital content and responding to read requests for the digital content uploaded.
FIG. 5 depicts an example implementation of a user interface configured to receive an upload request for digital content via user input.
FIG. 6 depicts an example implementation of a user interface configured to broadcast response including content corresponding to the unique identifier corresponding to the digital content uploaded.
FIG. 7 depicts a procedure in an example implementation of distributing digital content with edge devices.
FIG. 8 illustrates an example system including various components of an example device that can be implemented as any type of computing device as described and/or utilized with reference to FIGS. 1-7 to implement examples of the techniques described herein.

### DETAILED DESCRIPTION

### Overview

Conventional techniques for distributing digital content over long distances - particularly for uploading - generally involve multiple network hops, each of which adds significant latency to the overall process. The limitations of the conventional techniques for distributing digital content over long distances result in adverse outcomes to computational resource consumption, including substantial latency issues and inefficiently long upload and retrieval times.

Techniques for distributing digital content with edge devices are described that address these limitations. Consider an example in which Alice, a user in London, seeks to upload a high-resolution digital image to a platform hosted in Seattle, Washington. Using an application on a respective client device, Alice initiates an upload request (e.g., via a user account) by selecting a high-resolution digital image and confirming the upload. The upload request is routed via the client device to an edge computing network. The request includes relevant data, such as the file of the digital image, Alice's client device's geolocation, and so forth.

Based on the upload request, a nearest edge device (e.g., a Point of Presence ("PoP")) of the edge computing network, located in London, receives the upload request from Alice's client device. The edge device sends a non-blocking call to upload the digital content to a primary storage device located in Seattle. To do so, the edge device generates a unique identifier ("UID") corresponding to the digital image, such as a Universally Unique Identifier ("UUID"). The UID is a unique reference generated by the system to ensure that the digital image can be identified and retrieved across the edge computing network. The London edge device stores the digital image in its local cache and associates the image with the generated UID.

Subsequently, the London edge device initiates a process of replicating the digital image by sending replication requests to additional edge devices across the edge computing network. For example, the digital image is replicated to edge devices in Paris, New York, and Seattle. These replication requests ensure that the digital image is stored at a predefined number of edge devices within the edge computing network, allowing the digital image to be quickly and efficiently retrieved from locations near potential client devices in different regions.

Upon receiving confirmation that the digital image has been successfully stored at the predefined number of edge devices, the London edge device generates a response for the Alice's client device. This response includes content corresponding to the UID, such as one or more unique URLs that incorporate the UID, which Alice can use to access or share the image. The success response is broadcast to Alice's client device, informing Alice that the digital image is now accessible via the content corresponding to the UID.

By leveraging edge devices across multiple geographic regions, the edge computing network ensures the digital image is readily available to users in close proximity to the edge devices. For example, if Bob, a user in Seattle, wishes to view the digital image, a system retrieves the digital image from the edge device that is closest to Bob (e.g., based on network proximity), thus minimizing latency. Similarly, if users in Paris or New York request access the digital image, the digital image is provided from a nearest edge device (e.g., the Paris edge device or the New York edge device), thus optimizing performance. Therefore, the described techniques for distributing digital content with edge devices effectively address latency and performance issues and other technical challenges commonly associated with long-distance digital content distribution techniques.

In the following discussion, an example environment is described that employs the techniques described herein. Example procedures are also described that are performable in the example environment as well as other environments. Consequently, performance of the example procedures is not limited to the example environment and the example environment is not limited to performance of the example procedures.

### Example Environment

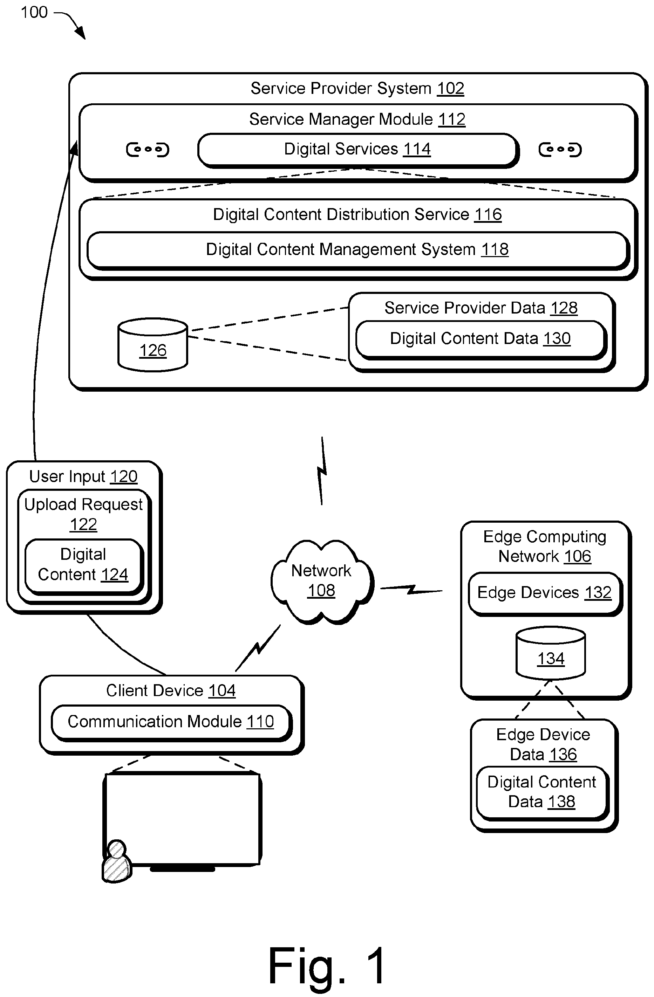

FIG. 1 is an illustration of a digital medium environment 100 in an example implementation that is operable to employ techniques and systems for distributing digital content with edge devices.

The illustrated environment 100 includes a service provider system 102, a client device 104, and a edge computing network 106 that are communicatively coupled, one to another, via a network 108. The service provider system 102 is a system that provides a range of digital services to client devices (including the client device 104), often through the use of a distributed network infrastructure. In the context of the digital medium environment 100, the service provider system 102 represents various functionality pertaining to digital services, examples of which include uploading, distributing, replicating, and managing digital content. The service provider system 102 is configured to interact with client devices (e.g., the client device 104), edge computing networks (e.g., the edge computing network 106), and edge devices (e.g., edge devices 132).

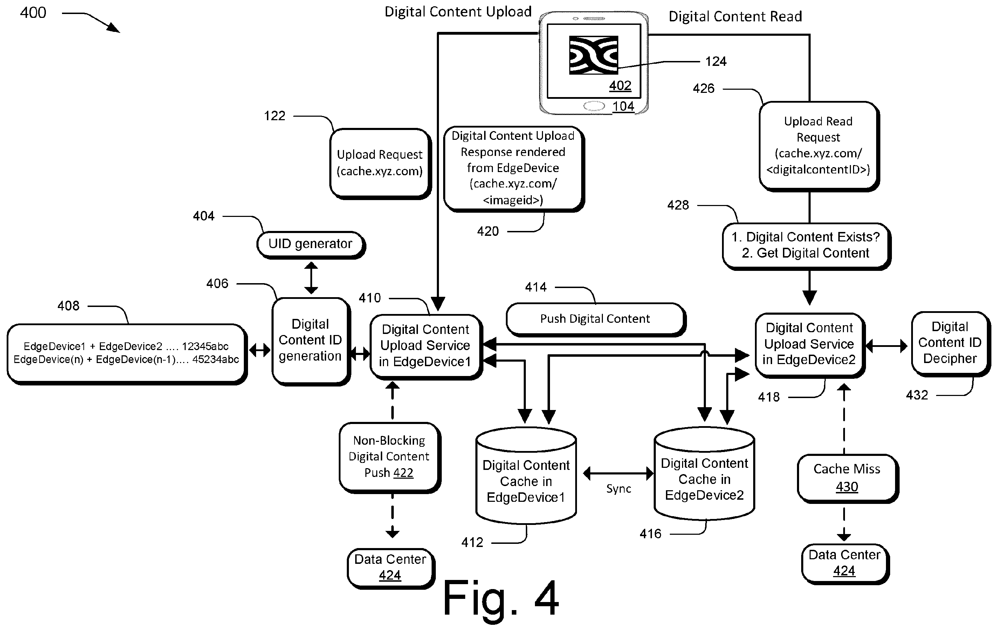

The edge computing network 106 is a network including edge devices 132 that work together to distribute digital content (e.g., digital images, etc.) to client devices (e.g., the client device 104). In this illustrated example, the edge computing network 106 includes the edge devices 132. The edge devices 132 are configurable to perform operations pertaining to digital content, such as storing copies of the digital content and retrieving copies of the digital content for client devices, such as the client device 104. In some examples, the edge computing network 106 includes a primary storage device (e.g., at a data center) for long term storage of the digital content, as illustrated in FIG. 4. In some examples the edge computing network 106 is included as part of the service provider system 102.

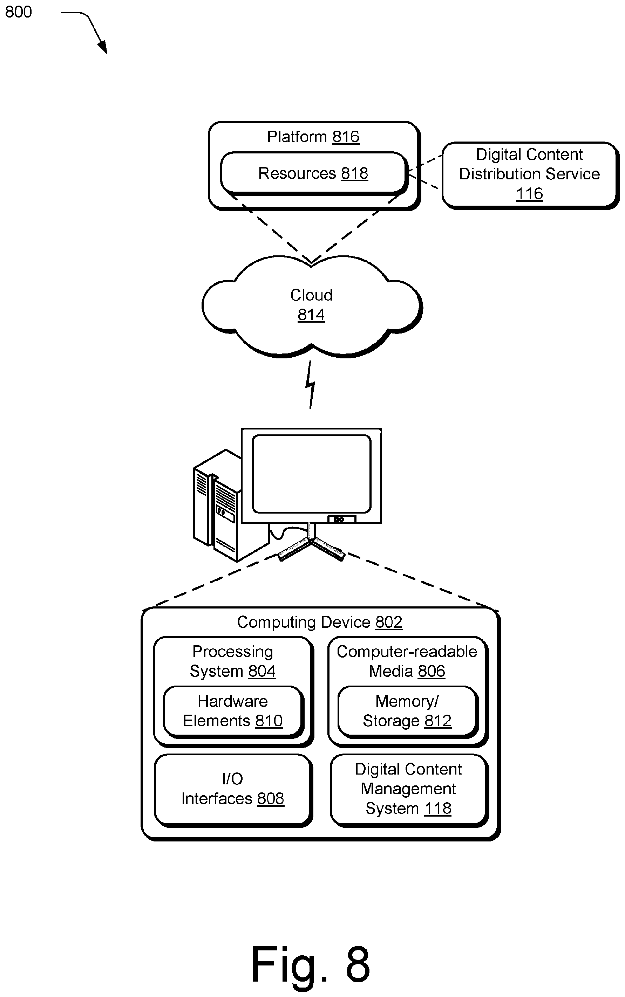

Computing devices that implement the service provider system 102, the client device 104, and the edge computing network 106 are configurable in a variety of ways. The computing devices include various devices, such as desktop computers, laptops, mobile devices (e.g., smartphones, tablets), smart appliances, IoT ("Internet of Things") devices, wearables, and so on. Thus, a computing device ranges from full resource devices with substantial memory and processor resources (e.g., personal computers, game consoles) to a low-resource device with limited memory and/or processing resources (e.g., mobile devices). Additionally, although a single computing device is described in some examples, a computing device is also representative of a plurality of different devices, such as multiple servers utilized by a business to perform operations "over the cloud" as described in FIG. 8.

The client device 104 includes a communication module 110 that is representative of functionality to communicate via the network 108 with a service manager module 112 of the service provider system 102. The communication module 110 is also representative of functionality (e.g., browser, web enabled applications, and so forth) to communicate via the network 108 with various computing devices, such as the edge device 132 of the edge computing network 106. In the illustrated example, the client device 104 utilizes the communication module 110 to communicate a user input 120 received via a user interface of the client device 104, including an upload request 122 for digital content 124 to be uploaded. The user input 120 includes various types of user input 120, such as selections, clicks, spoken input, recognized facial input, specifications, commands, or queries provided by users via a user interface of the client device 104. The digital content 124 includes any type of digital content, examples of which include digital images, videos, audio files, digital files, and so forth.

Regarding the service manager module 112 of the service provider system 102, the service manager module 112 is representative of functionality to implement digital services 114 of the service provider system 102. Digital services 114 are usable to expose a variety of functionality to the client device 104, an example of which is illustrated as a digital content distribution service 116. The digital content distribution service 116 is configured to distribute digital content based on received inputs. The digital content distribution service 116, for instance, is configurable to upload digital content, replicate digital content, store digital content, generate digital content, and so forth.

In the illustrated example, the digital content distribution service 116 employs a digital content management system 118. The digital content management system 118 is configured to manage the digital content for the digital content distribution service 116. Examples include storing, caching, replicating, retrieving, or generating digital content, generating or retrieving UIDs pertaining to the digital content, and so forth. The digital content management service 116 also employs a storage device 126, which includes service provider data 128 including digital content data 130. The service provider data 128 is data corresponding to the service provider system 102. The digital content data 130 corresponds to digital content for the digital content distribution service 116, such as identifiers for the digital content, files for the digital content, content corresponding to the digital content (e.g., request and response data pertaining to the digital content), and so forth.

The digital content management system 118 represents functionality to communicate with other computing devices, including the edge computing network 106, edge devices 132, and so forth. The digital content management system 118 also represents functionality to distribute digital content to and from the edge devices 132. Examples of the edge devices 132 include distributed edge devices 132, Point of Presence ("PoPs"), and so forth. The edge devices 132 can be located in various geographic regions to provide low-latency access and uploading of digital content.

In this illustrated example, the edge computing network 106 includes a storage device 134, which includes edge device data 136. The edge device data 136 represents data pertaining to the edge devices 132, such as the digital content 124 stored, unique identifiers pertaining to the digital content 124 stored, identifiers pertaining to each edge device of the edge devices 132, the digital content data 138, metadata, version histories, and so forth. The digital content data 138 represents data pertaining to the digital content 124 that is distributed with the edge devices 132. In some examples, the edge devices 132 are included as part of a different type of network or system than the content distribution network, examples of which include, but are not limited to, an IoT network, fog computing system, or a distributed cloud system. For IoT networks, for instance, the edge devices 132 can act as local nodes for processing and distributing sensor data.

The components allow for techniques for distributing digital content with edge devices that effectively address the latency and performance issues commonly associated with conventional techniques for long-distance digital content distribution. These components enable direct uploads to nearest edge devices of the edge devices 132 relative to a client device's 104 geolocation and to prime a corresponding digital content cache in proximity to the client device 104 for enhanced retrieval efficiency.

These techniques for distributing the digital content 124 substantially reduces bandwidth usage and load on the long-term storage of the service provider system 102 or the edge computing network 106, which are typically centralized data centers away from the edge of the service provider system 102 or the edge computing network 106. These components result in improved digital content upload performance by effectively leveraging the distributed nature of edge devices (e.g., PoPs) and intelligently caches the digital content 124, thus providing substantially more scalable and efficient techniques for distributing and managing digital content via the network 108. The described techniques provide substantially lower latency distribution (e.g., uploading) of the digital content 124. Further discussion of these and other examples is included in the following sections and shown in corresponding figures.

In general, functionality, features, and concepts described in relation to the examples above and below are employed in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are applicable together and/or combinable in different ways. Thus, individual functionality, features, and concepts described in relation to different example environments, devices, components, figures, and procedures herein are usable in any suitable combinations and are not limited to the particular combinations represented by the enumerated examples in this description.

### Distributing Digital Content With Edge Devices

The following discussion describes digital content distribution techniques that are implementable utilizing the previously described systems and devices. Aspects of each of the procedures are implemented in hardware, firmware, software, or a combination thereof. The procedures are shown as a set of blocks that specify operations performed and/or caused by one or more devices and are not necessarily limited to the orders shown for performing the operations by the respective blocks.

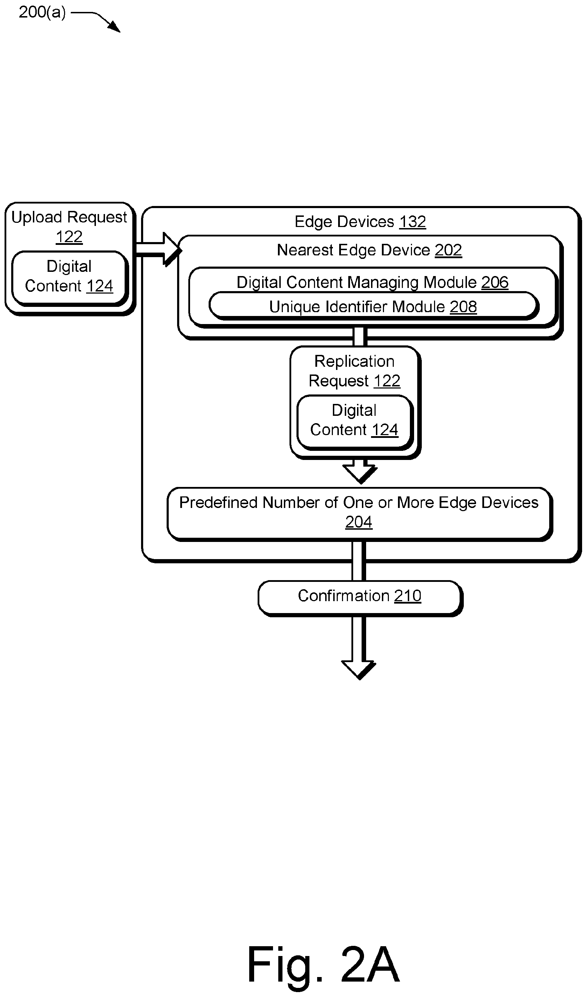

FIG. 2A depicts a system 200(a) in an example implementation showing operation of the edge devices 132 of FIG. 1 in higher detail for uploading digital content. The edge devices 132 include a nearest edge device 202 and a predefined number of one or more edge devices 204 of the edge devices 132. The nearest edge device 202 refers to a closest edge device, such as a closest edge device within a edge computing network or a distributed cloud infrastructure. Examples of a nearest edge device 202 include but are not limited to a edge computing network edge server, a mobile edge computing node, an ISP caching proxy server, a cloud edge gateway, an enterprise edge server, and so forth. In some examples, the edge devices 132 are PoPs.

To continue this example implementation, the nearest edge device 202 receives the upload request 122 including the digital content 124 via a digital content managing module 206. In some embodiments, the upload request 122 is received based on a geolocation of a client device 104. In some examples, the nearest edge device 202 receives the upload request 122 (e.g., as a POST request) from the communication module 110 of the client device 104. In some embodiments, the upload request 122 includes a security token for validation, such as an API token. The digital content managing module 206 is configured to perform operations corresponding to the upload requests 122 and the digital content 124, examples of which include managing, distributing, and tracking the digital content 124. In some examples, the digital content 124 includes one or more digital images. In some embodiments, the digital content managing module 206 validates and authenticates the upload request 122.

The digital content managing module 206 includes a unique identifier module 208, which is configured to perform operations corresponding to unique identifiers, such as generating a unique identifier corresponding to the digital content 124. The unique identifier module 208 generates a unique identifier (e.g., a globally unique identifier) for the digital content 124 uploaded. This unique identifier is formattable in various ways, examples of which include alphanumeric strings, cryptographic hashes (e.g., SHA-256, MD5), file paths, URLs, or Digital Object Identifiers (DOIs). The unique identifier enables the digital content 124 to be uniquely identifiable and retrievable across the edge devices 132.

The unique identifier module 208 initiates one or more replication requests 122 including the digital content 124 to a predefined number of one of more edge devices 204. In some embodiments, the predefined number is a quorum number of edge devices of the edge devices 132. In some implementations, the nearest edge device 202 initiates replication of the digital content 124 to the predefined number of one or more edge devices 204 by sequentially sending replication requests to the second nearest edge device, followed by the next closest edge device, and so forth, along the most direct path toward the final destination edge device of the edge devices 132.

In some examples, the replication request 122 includes data for propagating copies of the digital content 124 to the predefined number of one or more edge devices 204. In some embodiments, the unique identifier module 208 uses a predefined routing technique to determine the predefined number of one or more edge devices 204, which are to receive the copies of the digital content 124. In some implementations, the number of replicated copies is determined by a formula such as (N+1)/2, in which N represents the total number of the edge devices 132 available. The predefined number of one or more edge devices 204 ensures redundancy and availability, avoiding the shortcomings of conventional techniques relying on a centralized primary storage system.

In some examples, the replication of the digital content 124 by the predefined number of one or more edge devices 204 occurs asynchronously and in near real-time, such that even if network bandwidth is limited, the system 200a prioritizes local caching at the nearest edge device 202 while transferring data to long-term storage in the background. This differs from conventional methods that require full completion of the upload before content is made available, reducing perceived upload times for users. Additionally, edge cache identifiers may be assigned to each respective piece of digital content by the predefined number of one or more edge devices 204, providing a direct path for retrieval without querying backend storage.

After successful replication, the predefined number of one or more edge devices 204 generates a confirmation 210, indicating that the digital content 124 has been stored at the predefined number of one or more edge devices 204. In some examples, the confirmation 210 includes a success response including a network address (e.g., cache.xyz.com/<imageid>) that enables the user to retrieve the digital content, a broadcast to the client device 104 providing an interactive link (e.g., a selectable URL) to access the digital content 124 uploaded, and/or security tokens or API keys for controlled access for the digital content 124 uploaded. By utilizing the nearest edge device 202 for initial processing and distributing of the digital content 124 across the edge devices 132, the system 200a substantially decreases upload latency and increases the efficacy of efficient distribution of the digital content 124.

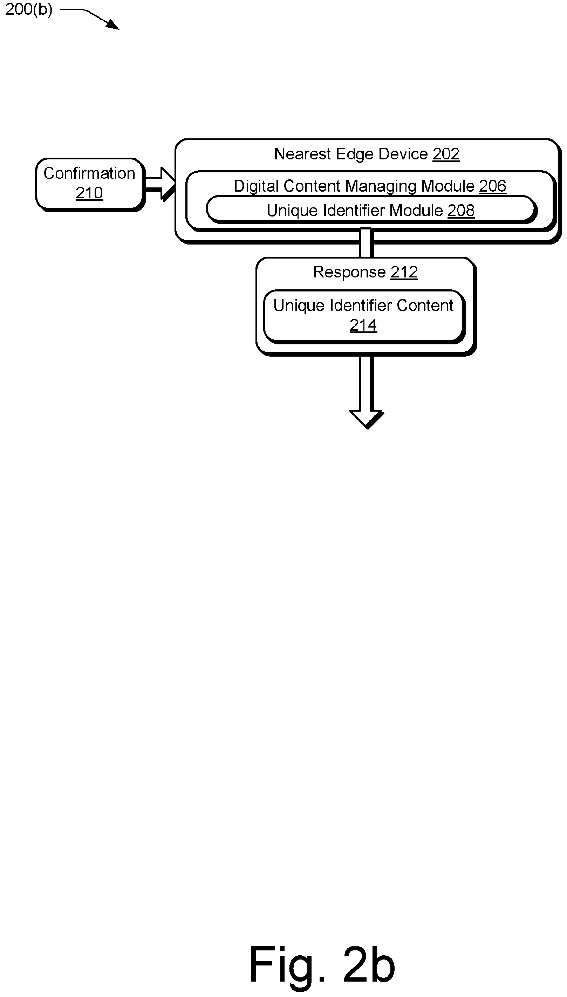

In the context of the confirmation 210, consider next the following discussion of FIG. 2B.

FIG. 2B depicts a system 200(b) in an example implementation depicting operation of a nearest edge device 202 of FIG. 2A in higher detail as broadcasting a response 212 including content corresponding to a unique identifier corresponding to the digital content 124 uploaded. The system 200(b) includes the nearest edge device 202, digital content managing module 206, unique identifier module 208, and the confirmation 210 of FIG. 2A.

To begin this example implementation of system 200(b), the nearest edge device 202 receives the confirmation 210 that the digital content 124 is replicated or stored at the predefined number of one or more edge devices 204 of the edge devices 132. Responsive to receiving the confirmation 210, the digital content managing module 206 generates a response 212 including content corresponding to the unique identifier, which is illustrated as the unique identifier content 214 in this example implementation. In some examples, the response 212 includes content usable to access the digital content 124 and that corresponds to the unique identifier corresponding to the digital content 124. In some implementations, the response 212 includes one or more network addresses (e.g., cache.xyz.com/<imageid>, i.img.xyz.com/imageid, etc.) corresponding to the unique identifier corresponding to the digital content 124 uploaded, which are selectable to initiate a read request for the digital content 124 uploaded to any of the edge devices 132 (e.g., the nearest edge device 202, the predefined number of one or more edge devices 204, etc.) storing the digital content 124.

The nearest edge device 202 broadcasts the response 212 for display via a user interface, such as the user interface of the client device 104. In some examples, the response 212 is broadcasted to the client device 104 by either the nearest edge device 202 or the service provider system 102 for display In some implementations, the content of the response 212 is selectable via user input provided via the user interface of the client device 104 to transmit a read request for receipt by the service provider system 102 and/or the nearest edge device 202.

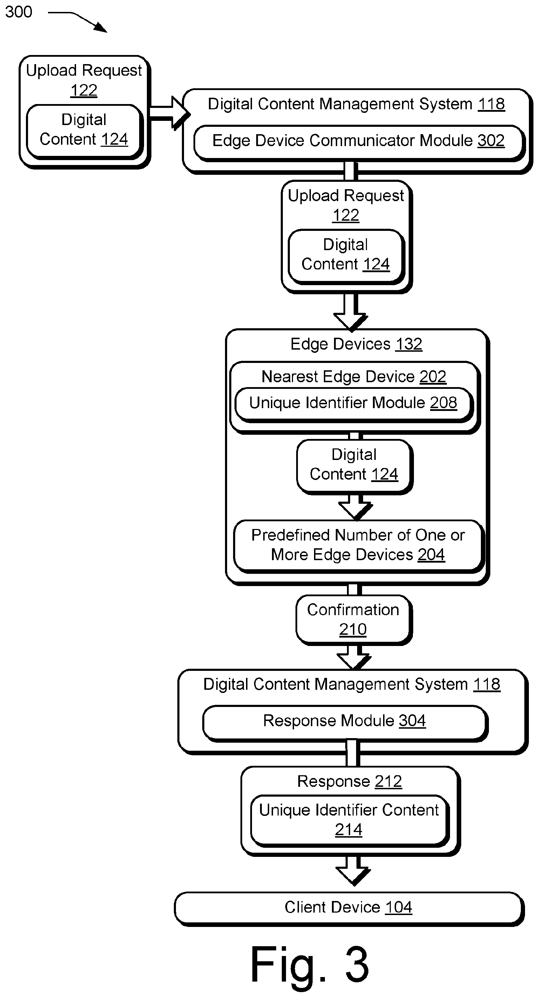

In the context of digital content distribution using the edge devices 132, consider next the following discussion of FIG. 3.

FIG. 3 depicts a system 300 in an example implementation showing operation of the digital content management system 118 of FIG. 1 is higher detail as uploading the digital content 124 with the edge devices 132. The digital content management system 118 includes an edge device communicator module 302, which is configured to perform operations corresponding to the edge devices 132, such as identifying edge devices 132 that are the closest, communicating the upload requests 122 or the digital content 124 to one or more of the edge devices 132, and so forth.

To begin this example implementation, the digital content management system 118 receives the upload request 122 including the digital content 124 from the client device 104. The edge device communicator module 302 communicates the upload request 122 including the digital content 124 to the nearest edge device 202 of the edge devices 132. In some examples, the edge device communicator module 302 identifies the nearest edge device 202 in the context of the client device 104. In some embodiments, the edge device communicator module 302 identifies the nearest edge device 202 based on factors such as geolocation, network latency, predefined routing policies, and so forth.

The nearest edge device 202 communicates the digital content 124 to the predefined number of one or more edge devices 204 of the edge devices 132. The nearest edge device 202 receives the upload request 122. The unique identifier module 208 processes the upload request 122 for storage and further replication. The nearest edge device 202 uploads the digital content 124. The unique identifier module 208 generates a unique identifier for the digital content 124 uploaded. The unique identifier enables the digital content 124 to be efficiently retrievable and referenceable.

Based on the upload request 122, the unique identifier module 208 identifies a predefined number of one or more edge devices 204 for the digital content 124 to be further replicated by. The predefined number of one or more edge devices 204 enhance redundancy, availability, and retrieval efficiency by ensuring that copies of the digital content 124 exist in a plurality of locations.

The nearest edge device 202 communicates the digital content 124 to the predefined number of one or more edge devices 204. In some examples, the nearest edge device 202 communicates other information in addition to the digital content 124 to the predefined number of one or more edge devices 204, such as the unique identifier or the unique identifier content 214. The nearest edge device 202 receives notification of the successful storage of the digital content 124 by the predefined number of one or more edge devices 204. The nearest edge device 202 generates the confirmation 210 indicating the successful storage of the digital content 124. In some examples, the confirmation 210 includes the unique identifier corresponding to the digital content 124.

The nearest edge device 202 communicates the confirmation 210 to the digital content management system 118. The digital content management system 118 communicates the confirmation 210 to the response module 304, which is configured to generate responses 212 including unique identifier content 214 based on the confirmation 210. The response module 304 generates the response 212 including the unique identifier content 214. In some examples, the unique identifier content 214 includes one or more network addresses corresponding to the unique identifier.

The response module 304 communicates the response 212 to the client device 104 for display via a user interface. By leveraging the edge devices 132, the digital content management system 118 substantially minimizes upload latency, increases content delivery efficiency, and enhances content availability.

FIG. 4 depicts a system 400 in an example implementation showing operation of the edge devices 132 for uploading the digital content 124 and responding to read requests for the digital content 124 uploaded. The system 400 includes a user interface 402 of the client device 104, through which users can upload digital content 124. Upon receiving an upload request 122 at a digital content upload service 410 in a nearest edge device 202 (e.g., EdgeDevice1), the nearest edge device 202 generates unique identifier content 214 (e.g., a unique identifier ("UID")) for the digital content 124 using a UID generator 404.

In examples where multiple pieces of digital content 124 are uploaded, the nearest edge device 202 generates 406, for each piece of digital content 124, the unique identifier content 214 (e.g., the UID) via the UID generator 404. In some examples, the UID may be generated by combining 408 one or more identifiers from multiple edge devices 132, ensuring global uniqueness and facilitating efficient retrieval. By way of example, the identifiers of EdgeDevice1, EdgeDevice2, and so forth, of the edge devices 132, may be used in this process.

Once the UID is generated, the nearest edge device 202 stores the digital content 124 in a local cache 412 of the nearest edge device 202. In some examples, this upload technique is non-blocking (e.g., see the non-blocking digital content push 422), enabling the system 400 to quickly accept and acknowledge the digital content 124 upload. This completes the transfer of the digital content 124 from the client device 104 to the nearest edge device 202.

Subsequent to the upload, the system 400 may push 414 the digital content 124 to caches (e.g., a digital content cache 416 in EdgeDevice2 via the digital content upload service 418 in EdgeDevice2) in additional edge devices 132 (e.g., a predefined number of one or more edge devices 204) across the network of the edge devices 132, a process that is, in some implementations, carried out asynchronously to ensure that the digital content 124 is readily available at the nearest edge device 202 closest to a user who may request the digital content 124. This feature ensures high availability and redundancy, enabling rapid delivery of digital content 124 to the client devices 104.

Once the digital content 124 is stored in the cache 412, a user may receive, in some examples from the nearest edge device 202, edge computing network 106, or a service provider system 102, a success response 420 (e.g., response 212) that includes a unique network address (e.g., a URL) 426 incorporating the UID, such as the unique identifier content 214. In some examples, this response 212 may be sent to the client device 104 once the digital content 124 is available in at least a predefined number of edge devices 204 across the network of edge devices 132. In at least one example, the system 400 may additionally, or alternatively, communicate a non-blocking digital content push 422 to transfer the digital content 124 to long-term storage in a data center 424.

When the system 400 receives an upload read request 426 for the uploaded digital content 124, in some examples, the system 400 utilizes the UID via digital content ID deciphering (as represented by element 432) to identify an optimal edge device for delivering the digital content 124 to the client device 104. In some implementations, the system 400 resolves the UID to determine where the requested digital content 124 is located, mapping the UID to a specific location, checking caches in edge devices 132 (e.g., 412, 416) for availability. In some examples, the system 400 may make one or more concurrent calls to: check the local cache of the nearest edge device 202 for the requested digital content 124; check other edge device caches (e.g., cache 416) within the network of edge devices 132, if necessary; and/or check the long-term storage in the data center 424 if the digital content 124 is not available via any cache (e.g., cache 412 or cache 416) of the edge devices 132. In some examples, the system 400 determines the lowest latency edge device of the edge devices 132 capable of delivering the requested digital content 124 efficiently, for transmittal of the digital content 124. In some implementations, the system 400 performs parallel lookups across multiple storage locations and selects the fastest responding source. In some examples, the system 400 (e.g., an edge device 132 of the system 400) compares latencies of responses received from the one or more edge devices 132 and selects an edge device with the lowest latency response as the lowest latency edge device.

The digital content 124 retrieved from the fastest available path is then served to the client device 104 by the system 400 from the fastest available path (e.g., via the nearest edge device 202). In this way, the described techniques effectively reduce bandwidth usage and load on the data center 428 by leveraging the network of the edge devices 202 and caching the digital content 124 based on user demand and geographic distribution. As a result, the system 400 provides a scalable and efficient method for managing and distributing digital content 124, particularly beneficial for high-availability and low-latency content upload and retrieval operations.

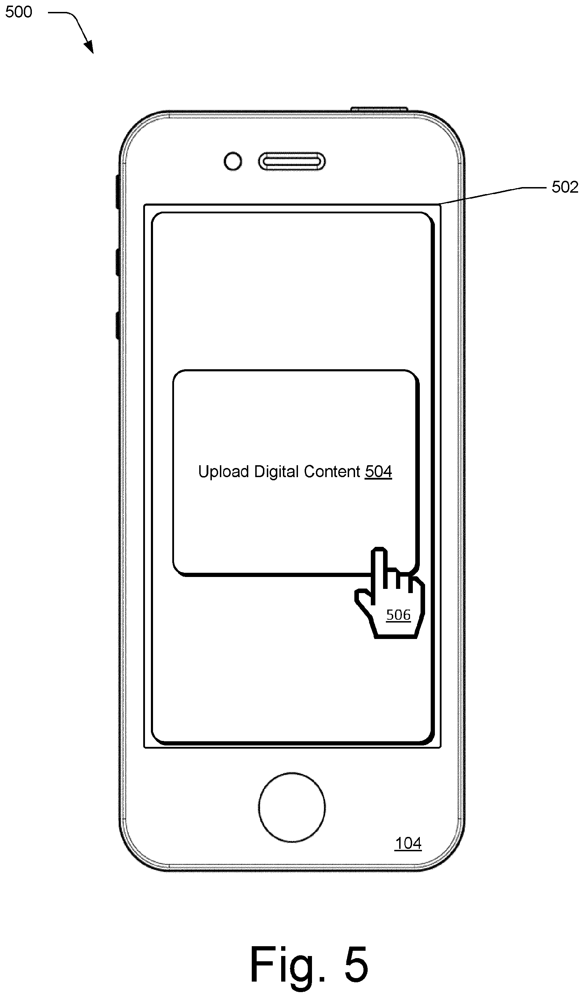

FIG. 5 illustrates an example implementation 500 of a user interface 502 configured to receive an upload request 122 for digital content 124 via user input 120. The example implementation 500 depicts a client device 104. The client device 104 includes the user interface 502 displaying a selectable upload interface 504 with text indicating "Upload Digital Content". This selectable upload interface is configured to enable users to initiate the upload process described at least in relation to FIG. 4 and throughout this written description via a user selection 506, where the digital content 124 is transferred from the client device 104 to the nearest edge device 202 for processing and distribution across the network of edge devices 132.

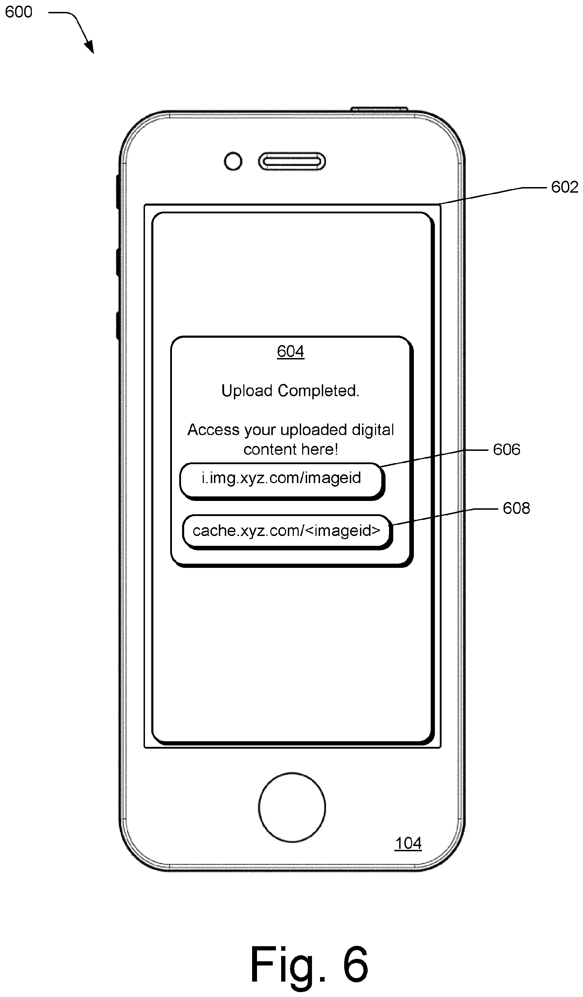

FIG. 6 illustrates an example implementation 600 of a user interface 602 configured to broadcast a response 604 including unique identifier content 606 and unique identifier content 608 corresponding to the unique identifier corresponding to the digital content 124 uploaded. Example implementation 600 depicts a client device 104 with the user interface 602 presenting an upload status window as the response 604. This window includes the unique identifier content 606 as a primary content link and the unique identifier content 608 as a cache content link, which correspond to the unique network addresses generated by the digital content management system 118 after successful upload and distribution of the digital content 124.

These links enable the user to access the uploaded digital content 124 either from the primary storage location or from the distributed edge device caches, as described in the content retrieval process of FIG. 4 and throughout this written description. The presence of both links demonstrates the system's ability to provide multiple access points for the uploaded content, leveraging the distributed nature of the edge device network.

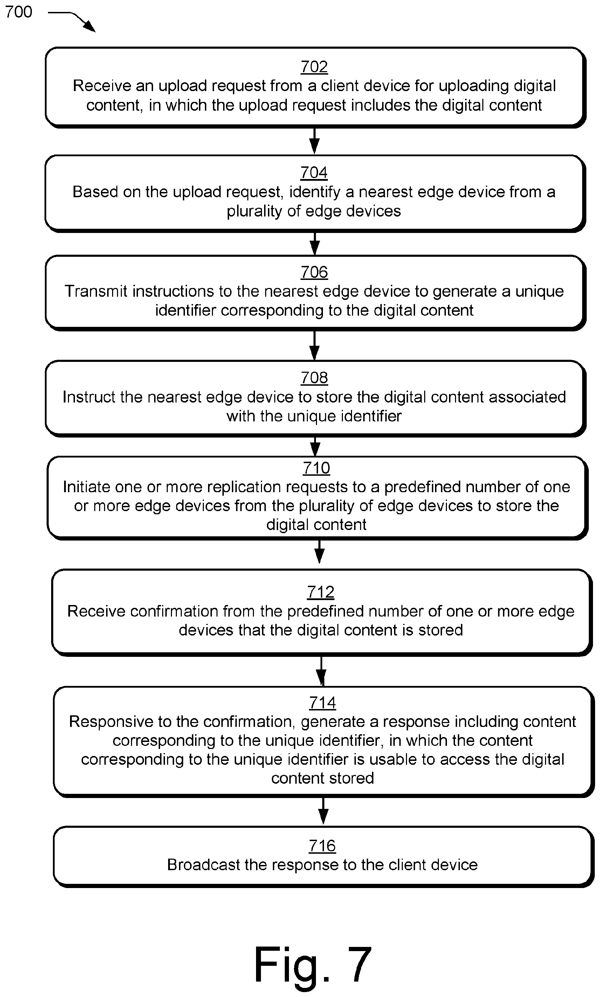

In the context of digital content distribution using edge devices, consider next the following discussion of FIG. 7.

### Example Procedures

The following discussion describes techniques which are implementable utilizing the previously described systems and devices. Aspects of each of the procedures are implementable in hardware, firmware, software, or a combination thereof. The procedures are shown as a set of blocks that specify operations performed by one or more devices and are not necessarily limited to the orders shown for performing the operations by the respective blocks. In portions of the following discussion, reference is made to FIGS. 1-7.

FIG. 7 depicts a procedure 700 in an example implementation of digital content distribution using edge devices. To begin, an upload request 122 is received from a client device 104 for uploading digital content 124, where the upload request 122 includes the digital content 124 (block 702). In a real-world scenario as described above, this upload request 122 may involve a user in London using a mobile app to upload a high-resolution photo via the digital content distribution service 116.

Based on the upload request 122, a nearest edge device 202 is identified from a plurality of edge devices 132 (block 704). For instance, the digital content management system 118 might determine that a nearest edge device 202 to the user in London is a local data server within the city, rather than a more distant server.

Instructions are transmitted to a nearest edge device 202 to generate a unique identifier corresponding to the digital content (block 706). Continuing with the previous example, this may involve the London edge device generating a unique hash or alphanumeric code for the uploaded photo, ensuring it can be distinctly identified within the network.

The nearest edge device 202 is instructed to store the digital content 124 associated with the unique identifier (block 708). In our example, the London edge device saves the high-resolution photo in its local storage, associating the photo with the generated unique identifier.

The digital content management system 118 initiates one or more replication requests 122 to a predefined number of one or more edge devices 204 from the plurality of edge devices 132 to store the digital content 124 (block 710). The digital content management system 118, for instance, may request that the photo is to be replicated to edge devices in Paris, New York, and Tokyo to ensure faster access for user devices in those regions. In some examples, the nearest edge device 202 performs or triggers a parallel, non-blocking call to pass the digital content 124 for long-term storage at a primary storage device, such as a primary storage device located in a data center associated with the digital content distribution service 116.

Following this, confirmation 210 is received from the predefined number of one or more edge devices 204 that the digital content 124 is stored (block 712). The edge devices 204 in Paris, New York, and Tokyo, for instance, send back confirmations 210 indicating successfully storage of copies of the photo.

Responsive to the confirmation 210, the digital content management system 118 generates a response 212 including content corresponding to the unique identifier (unique identifier content 214), in which the content corresponding to the unique identifier is usable to access the digital content 124 stored (block 714). The unique identifier, for instance, is generated as a unique URL that includes the identifier, allowing the user to access the uploaded photo. In some examples, the unique identifier content 214 includes one or more network addresses corresponding to the unique identifier. In some implementations, the one or more network addresses include a cache network address and a primary network address.

The digital content management system 118 then broadcasts the response 212 to the client device (block 716). The digital content management system 118, for example, sends the generated URL back to the user's mobile app in London, confirming that the upload was successful, and provides a means to access the photo.

In the context of distributing digital content with edge devices, consider next the following discussion of FIG. 8.

### Example System and Device

FIG. 8 illustrates an example system generally at 800 that includes an example computing device 802 that is representative of one or more computing systems and/or devices that implement the various techniques described herein. This is illustrated through inclusion of the digital content management system 118 and the digital content distribution service 116. The computing device 802 is configurable, for example, as a server of a service provider, a device associated with a client (e.g., a client device), an on-chip system, and/or any other suitable computing device or computing system.

The example computing device 802 as illustrated includes a processing system 804, one or more computer-readable media 806, and one or more I/O interface 808 that are communicatively coupled, one to another. Although not shown, the computing device 802 further includes a system bus or other data and command transfer system that couples the various components, one to another. A system bus includes any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 804 is representative of functionality to perform one or more operations using hardware. Accordingly, the processing system 804 is illustrated as including hardware element 810 that is configurable as processors, functional blocks, and so forth. This includes implementation in hardware as an application specific integrated circuit or other logic device formed using one or more semiconductors. The hardware elements 810 are not limited by the materials from which they are formed or the processing mechanisms employed therein. For example, processors are configurable as semiconductor(s) and/or transistors (e.g., electronic integrated circuits (ICs)). In such a context, processor-executable instructions are electronically-executable instructions.

The computer-readable storage media 806 is illustrated as including memory/storage 812. The memory/storage 812 represents memory/storage capacity associated with one or more computer-readable media. The memory/storage 812 includes volatile media (such as random access memory (RAM)) and/or nonvolatile media (such as read only memory (ROM), Flash memory, optical disks, magnetic disks, and so forth). The memory/storage 812 includes fixed media (e.g., RAM, ROM, a fixed hard drive, and so on) as well as removable media (e.g., Flash memory, a removable hard drive, an optical disc, and so forth). The computer-readable media 806 is configurable in a variety of other ways as further described below.

Input/output interface(s) 808 are representative of functionality to allow a user to enter commands and information to computing device 802, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., employing visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 802 is configurable in a variety of ways as further described below to support user interaction.

Various techniques are described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques are configurable on a variety of commercial computing platforms having a variety of processors.

An implementation of the described modules and techniques is stored on or transmitted across some form of computer-readable media. The computer-readable media includes a variety of media that is accessed by the computing device 802. By way of example, and not limitation, computer-readable media includes "computer-readable storage media" and "computer-readable signal media."

"Computer-readable storage media" refers to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include but are not limited to RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and are accessible by a computer.

"Computer-readable signal media" refers to a signal-bearing medium that is configured to transmit instructions to the hardware of the computing device 802, such as via a network. Signal media typically embodies computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 810 and computer-readable media 806 are representative of modules, programmable device logic and/or fixed device logic implemented in a hardware form that are employed in some examples to implement at least some aspects of the techniques described herein, such as to perform one or more instructions. Hardware includes components of an integrated circuit or on-chip system, an application-specific integrated circuit (ASIC), a field-programmable gate array (FPGA), a complex programmable logic device (CPLD), and other implementations in silicon or other hardware. In this context, hardware operates as a processing device that performs program tasks defined by instructions and/or logic embodied by the hardware as well as a hardware utilized to store instructions for execution, e.g., the computer-readable storage media described previously.

Combinations of the foregoing are also be employed to implement various techniques described herein. Accordingly, software, hardware, or executable modules are implemented as one or more instructions and/or logic embodied on some form of computer-readable storage media and/or by one or more hardware elements 810. The computing device 802 is configured to implement particular instructions and/or functions corresponding to the software and/or hardware modules. Accordingly, implementation of a module that is executable by the computing device 802 as software is achieved at least partially in hardware, e.g., through use of computer-readable storage media and/or hardware elements 810 of the processing system 804. The instructions and/or functions are executable/operable by one or more articles of manufacture (for example, one or more computing devices and/or processing systems 804) to implement techniques, modules, and examples described herein.

The techniques described herein are supported by various configurations of the computing device 802 and are not limited to the specific examples of the techniques described herein. This functionality is also implementable through use of a distributed system, such as over a "cloud" 814 via a platform 816 as described below.

The cloud 814 includes and/or is representative of a platform 816 for resources 818. The platform 816 abstracts underlying functionality of hardware (e.g., servers) and software resources of the cloud 814. The resources 818 include applications and/or data that can be utilized while computer processing is executed on servers that are remote from the computing device 802. Resources 818 can also include services provided over the Internet and/or through a subscriber network, such as a cellular or Wi-Fi network.

The platform 816 abstracts resources and functions to connect the computing device 802 with other computing devices. The platform 816 also serves to abstract scaling of resources to provide a corresponding level of scale to encountered demand for the resources 818 that are implemented via the platform 816. Accordingly, in an interconnected device example, implementation of functionality described herein is distributable throughout the system 800. For example, the functionality is implementable in part on the computing device 802 as well as via the platform 816 that abstracts the functionality of the cloud 814.

## Claims

1. A computer-implemented method, comprising:
receiving, by an edge device, an upload request from a client device for uploading digital content, in which the edge device is a nearest edge device to the client device of a plurality of edge devices, and the upload request includes the digital content;
generating, by the edge device, a unique identifier corresponding to the digital content;
storing, by the edge device, the digital content associated with the unique identifier;
sending, by the edge device, one or more replication requests to a predefined number of one or more edge devices of the plurality of edge devices to store the digital content;
receiving, by the edge device, from the predefined number of the one or more edge devices of the plurality of edge devices, confirmation that the digital content is stored at the predefined number of the one or more edge devices of the plurality of edge devices;
responsive to the confirmation, generating, by the edge device, a success response including content corresponding to the unique identifier, in which the content corresponding to the unique identifier is usable to access the digital content; and
broadcasting, by the edge device, the success response to the client device.

2. The computer-implemented method of claim **1,** wherein the plurality of edge devices are Points of Presence ("PoPs"); and/or the unique identifier is a Universally Unique Identifier ("UUID").

3. The computer-implemented method of claim 1 or 2, further comprising:
receiving, by the edge device, a read request for the digital content;
based on the read request, identifying, by the edge device, a lowest latency device storing the digital content; and
initiating, by the edge device, transmittal of the digital content from the lowest latency device to the client device.

4. The computer-implemented method of claim 3, wherein the lowest latency device is the nearest edge device and the identifying of the lowest latency device includes confirming that the digital content is stored at the lowest latency device.

5. The computer-implemented method of claim 3 or 4, wherein the identifying of the lowest latency device storing the digital content comprises:
identifying, by the edge device, one or more devices storing the digital content by using the unique identifier;
concurrently calling, by the edge device, the one or more devices storing the digital content, in which the one or more devices include the predefined number of the one or more edge devices;
comparing, by the edge device, latencies of responses received from the one or more devices; and
selecting, by the edge device, a device with the lowest latency response as the lowest latency device.

6. The computer-implemented method of any one of the preceding claims, wherein the unique identifier is generated based at least in part on an identifier corresponding to the edge device;
wherein the unique identifier may be generated based at least in part on one or more identifiers corresponding to the predefined number of the one or more edge devices of the plurality of edge devices.

7. The computer-implemented method of any one of the preceding claims, wherein the success response includes one or more network addresses corresponding to the unique identifier, wherein the one or more network addresses are selectable to initiate a read request for the digital content from any edge device storing the digital content.

8. The computer-implemented method of any one of the preceding claims, further comprising:
sending, by the edge device, a non-blocking call to upload the digital content to a primary storage device, in which the non-blocking call includes the digital content.

9. The computer-implemented method of any one of the preceding claims, further comprising validating, by the edge device, the upload request from the client device before generating the unique identifier, in which the upload request includes a security token for validation;
wherein the security token may be an API token.

10. A system comprising:
a memory component; and
a processing device coupled to the memory component, the processing device to perform operations comprising:
receiving an upload request from a client device for uploading digital content, in which the upload request includes the digital content;
based on the upload request, identifying a nearest edge device from a plurality of edge devices;
transmitting instructions to the nearest edge device to generate a unique identifier corresponding to the digital content and to store the digital content corresponding to the unique identifier;
initiating one or more replication requests to a predefined number of one or more edge devices from the plurality of edge devices to store the digital content;
receiving confirmation from the predefined number of one or more edge devices that the digital content is stored;
responsive to the confirmation, generating a response including content corresponding to the unique identifier, in which the content corresponding to the unique identifier is usable to access the digital content stored; and
broadcasting the response to the client device.

11. The system of claim 10, further comprising triggering a non-blocking call to upload the digital content to a primary storage device, in which the non-blocking call includes the digital content.

12. The system of claim 10 or 11, further comprising:
receiving a read request for the digital content from the client device;
based on the read request, identifying a lowest latency edge device storing the digital content; and
initiating transmittal of the digital content from the lowest latency edge device to the client device.

13. The system of any one of claims 10 to 12, wherein the plurality of edge devices are distributed edge devices; and/or the plurality of edge devices are part of at least one of a edge computing network, IoT network, fog computing system, or a distributed cloud system.

14. The system of any one of claims 10 to 13, wherein the content includes one or more network addresses corresponding to the unique identifier;
wherein the one or more network addresses may include a cache network address and/or a primary network address.

15. A transitory or non-transitory computer-readable storage medium storing executable instructions, which when executed by a processing device, cause the processing device to perform operations comprising:
receiving an upload request from a client device for uploading digital content, in which the upload request includes the digital content;
based on the upload request, identifying a nearest edge device from a plurality of edge devices;
transmitting instructions to the nearest edge device to generate a unique identifier corresponding to the digital content and to store the digital content corresponding to the unique identifier;
initiating one or more replication requests to a predefined number of one or more edge devices from the plurality of edge devices to store the digital content;
receiving confirmation from the predefined number of one or more edge devices that the digital content is stored;
responsive to the confirmation, generating a response including content corresponding to the unique identifier, in which the content corresponding to the unique identifier is usable to access the digital content stored; and
broadcasting the response to the client device.
